# EUROPÄISCHE PATENTANMELDUNG

(11) **EP 0 763 826 A2**
(43) Veröffentlichungstag der Anmeldung: **19.03.1997**
(21) Anmeldenummer: 96202570.6
(22) Anmeldetag: 16.09.1996
(51) Int. Cl.: G11B 33/04

(54) **Schrank bzw. CD-Regal mit einzelnen Kompartimenten**

(30) Priorität: 18.09.1995 DE 29514799 U
(71) Anmelder: Oosterom, Cornelis, 4225 PH Noordeloos (NL)
(72) Erfinder: Oosterom, Cornelis, 4225 PH Noordeloos (NL)
(74) Vertreter: Merkelbach, B.

(57) **Zusammenfassung**

Mehrere CD- und Video Kassetten werden normalerweise von der Benutzer senkrecht und/oder waagerecht in einem Kassettenbehälter oder in einem dazu geeigneten Schrank von diversen Typen angeordnet. Damit kein Platzraum verloren geht werden die Kassetten meistens nebeneinander aufgestellt oder sie werden sonst übereinander aufgelegt.

Werden Kassetten ausgenommen hat bei senkrechter Anordnung dieser Kassetten jeweils eine Kassettenreihe die Neigung umzufallen, dagegen bei waagerechter Anordnung ist das Gewicht mehrerer Kassetten jemals aufzuheben.

Es wird vorgeschlagen kleinere Anzahlen Kassetten in kleineren Fächer aufzustellen wobei die Fächer derart unter einem Winkel schräg in einem Schrank angeordnet sind dass die Kassetten sich darin leicht stapeln lassen. Ausserdem ist das Ansehen von mehreren Fächer worin die Kassetten sich automatisch anschliessen, ordentlich und dabei auch noch dekorativ. Die Kassetten können nach Links oder nach Rechts positioniert werden.

Bei gleichen Abmessungen für CD-Kassetten sind quadratische Fächer sinvoll, bei ungleichen Abmessungen für Video-Kassetten sind rechteckigen Fächer zu bevorzügen.

## Beschreibung

Die Erfindung bezieht sich auf einen Schrank bzw. ein Regal für CD-Kassetten. Bekanntlich werden CD-Kassetten bzw. Video-Kassetten rechtständig nebeneinander aufgestellt in einem Schrank auf horizontale Regale. Meistens betrifft der Schrank ein Gehäuse mit einer vertikalen Aufteilung in mehreren Kompartimenten (Fächer) worin die CD-Kassetten vertikal zu lagern sind.

Die Erfindung beabsichtigt eine neue attraktive Ausführung eines Schrankes die es ermöglicht die Lagerung der CD-Kassetten nach links oder nach rechts in einer schiefen Stand in benachbarten Kompartimenten stattfinden zu lassen. Dies wird dadurch ermöglicht indem jeweils ein viereckiges Kompartiment sich in seiner Lage im Gehäuse derart positioniert, dass die CD-Kassetten sich durch ihren Eigengewicht infolgedessen nur in einer schiefliegenden Aufstellung im Kompartiment bzw. im CD-Regal aufbewahrt befinden.

Obwohl nach seiner Ausführung ein rechteckiger Schrank vorgesehen wird und somit auch Kombinationen davon nach Art eines Zigzags möglich ist, ist eine bevorzugte Ausführungsform diejenige mit quadratischen Kompartimente und ist die Diagonal-Ebene worin sich jemals ein Paar - oben und unten - gegenüber einander liegenden Scheitelpünkte eines Kompartimentes befindet, gleich mit einer vertikalen Ebene.

Es entsteht dadurch jeweils ein quadratisches Schrank Modul womit zahllose Varianten ausgearbeitet werden können, abhängig davon ob man z.B. 4, 9, 16 oder mehr Kompartimenten pro Modul verlangt aber auch in Kombination mit grösseren Fächer wie sie für Video-Kassetten erforderlich sind.

Ausserdem besteht die Möglichkeit dass gleiche, kleinere und/oder grössere Schrankmoduleinheiten mit mehreren Fächer miteinander gekuppelt werden, sei es horizontal oder vertikal und oder wie so etwas mit Fliessen in einem gewünsten Zusammenhang bzw. Verband gewünscht wird. Kupplungselementen können z.B. dabei gebildet werden von handelsüblichen Profile in Kreuzform [bei Scheitelpunktkupplung] oder nur in Winkelform [bei Befestigung eines Scheitelpunktes auf der Mitte der benachbarten Seitenwand eines Gehäuses. Bei Benutzung von demontierbaren CD-Moduleinheiten kann es zweckhaft sein statt der Anwendung von Kupplungsprofile zur Bildung von zwei kuppelbaren Regale einfach die Seitenwände zweier benachbarten zerlegbaren Gehäusern zu verlängern damit auch weniger Material in Betracht kommt.

Werden geometrische Schrank- und/oder Regalformen erwünscht, können verschiedenen CD-Moduleinheiten mit einander kombiniert werden und eine Zerlegbarkeit für Versandt der verschiedenen Formteile für ein Kombinations-CD-Regal wird dann sicher noch zusätzlich bevorzugt.

Weiter wird vorgesehen dass die im Sicht kommenden Ränder der CD-Regale mit dekorativen Rahmen jeder bekannten und gewünschten Art (wie bei einem alten und/oder modernen Gemälde) vorgesehen werden können. Ausserdem, wird das CD-Regal nicht aufgehängt, sondern z.B. auf die Flur aufgestellt, sind bei quadratischer Ausführung z.B. Stützelementen gleichseitiger Dreiecksform wohl zu preferieren.

In der Zeichnung sind erfindungsgemässe Ausführungsbeispiele gezeigt.
Fig. 1 bis 1C sind schematische perspektivische Darstellungen eines CD-Regalmoduls (oder Video-Kassettemoduls) quadratischer Form mit bzw. ohne dekorativem Rahmen;
Fig. 2 zeigt eine horizontale Aufstellung dreier CD-Regalmodulen;
Fig. 3 zeigt schematisch eine andere geometrische Aufstellung von verschiedenen CD-Regalmodule;
Fig. 4 zeigt schematisch eine andere geometrische Aufstellung von verschiedenen CD-Regalmodule;
Fig. 5 zeigt schematisch die Anwendung von zwei verschiedenen Kupplungsprofilen;
Fig. 6 zeigt ein erfindungsgemässes CD-Regal versehen mit einem dekorativen Rahmen
Fig. 7 zeigt eine horizontale Aufstellung eines CD-Regales mit zwei Stützorgane;
Fig. 8 zeigt eine Ausführung mit mehreren erfindungsgemässen CD-Regalmoduleinheiten.

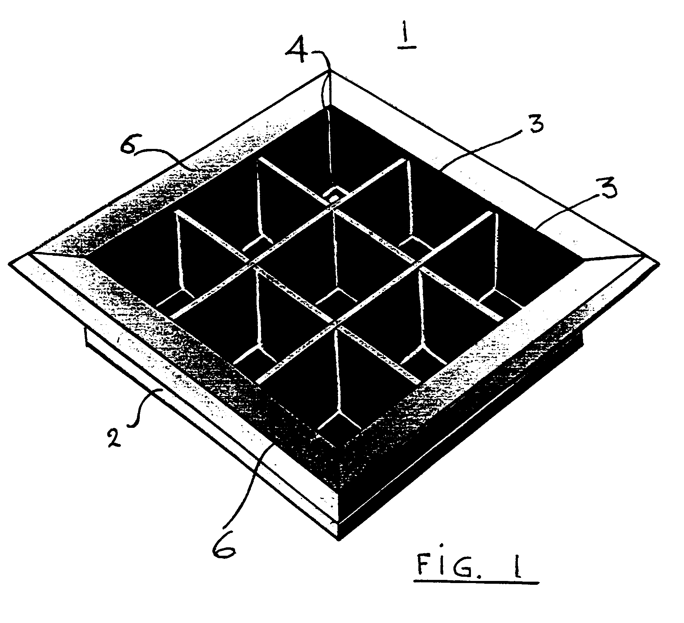

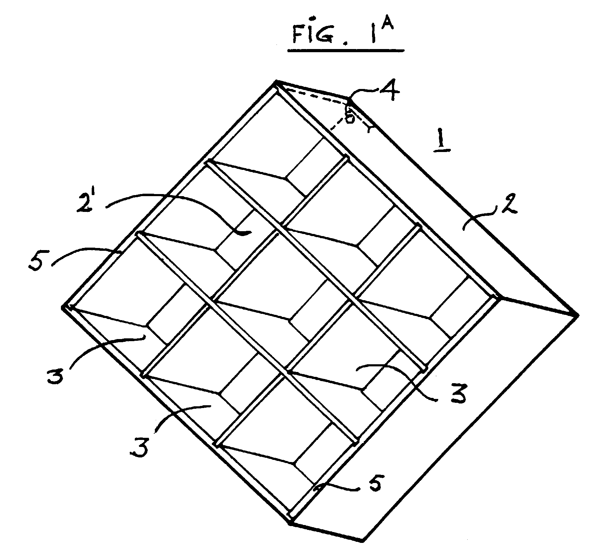

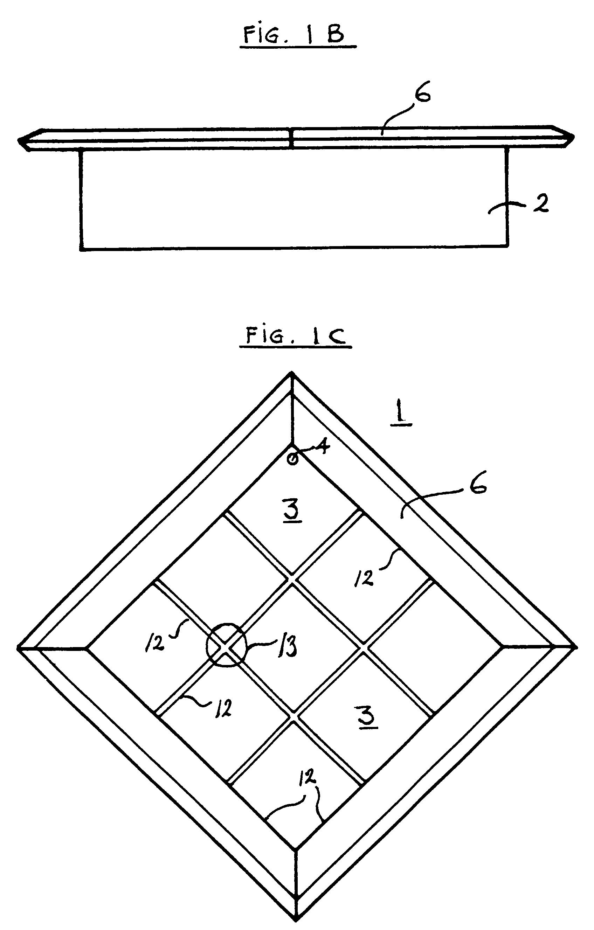

In Figur 1 bzw. 1A ist ein CD-Regalmodul 1 gezeigt das in seiner Grundform besteht aus einem untiefen quadratischen Gehäuse 2. Das Gehäuse 2 kann mit einer Rückwand 2' versehen werden obwohl dies nicht immer unbedingt notwendig ist. Als Rückwand kann z.B. auch eine Wand dienen wogegen das CD-Regal 1 aufgehängt wird. Das Gehäuse 2 ist innenseitig mit einer quadratischen Aufteilung in quadratischen Kompartimenten oder Fächer versehen ist zur Lagerung von einer Anzahl üblichen CD-Kassetten, hier nicht gezeigt.

Das CD-Regal wird im Scheitelpunkt 4 an eine Wand aufgehängt und/oder auf dem Scheitelpunkt auf einer flachen Ebene (Fig. 7) unterstützt.

Die Grundform ist auch geeignet für Einbau, wird übrigens normalerweise ausragend auf eine Wand befestigt. Sowohl für Einbau als bei Aufbau hinsichtlich der Wand werden die im Sicht stehenden Ränder 5 eines CD-Regals 1 versehen mit dekorativen Rahmen 6 wie z.B. üblich für Gemälde.

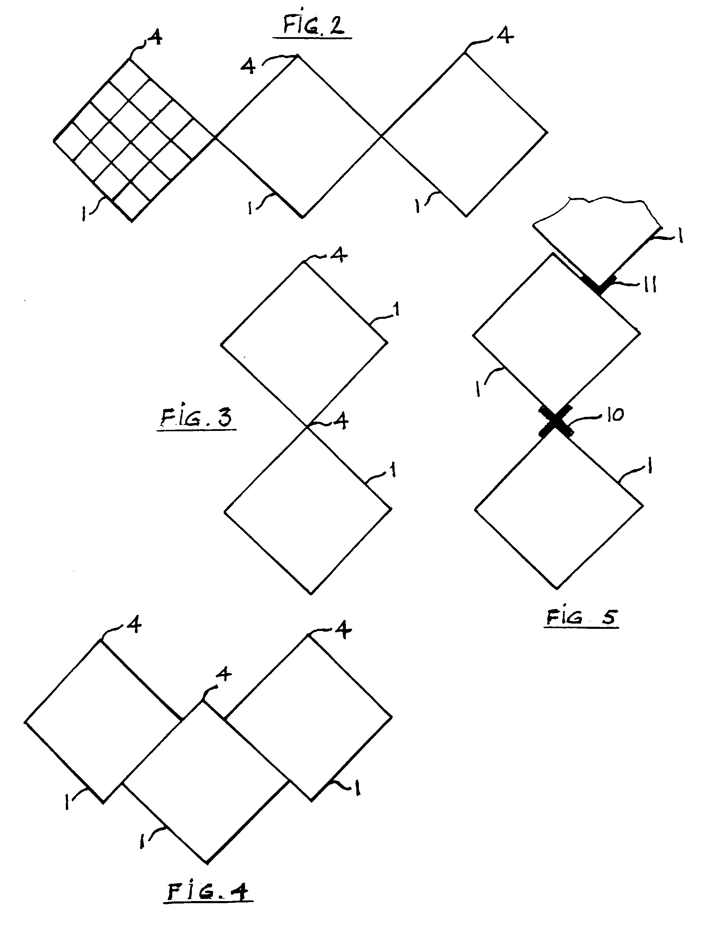

In den Figuren 24 sind einige Regal-Gehäuser 1 horizontal schematisch nebeneinander oder vertikal übereinander angeordnet in einer möglichen Konfiguration 7, 8 bzw. 9. Obwohl jedes Regal 1 in seinem eigenen Scheitelpunkt 4 aufgehängt werden kann, sind für die gegenseitige Kupplung zwischen benachbarten Regale auch Profile 10 und 11 vorgesehen, wie in Figur 5 dargestellt sind. Für diesen Zweck können handelsübliche Profile 10/11 benutzt werden z.B. in Aluminium oder Kunststoff, farbig oder eloxiert o.d.

Weiter können die Wände 12 der einzelnen Fächer für die Kassetten selbst farbig ausgeführt sein, z.B. in den sog. Mondriaan-Farben (Rot, Blau, Gelb, Weiss). Wie bekannt bei kartonnen Verpackungsdosen mit Fächer können die Trennungswände zerlegbar ausgeführt sein dadurch dass die Wandteile über die Hälfte versehen werden mit Einschnitte (nicht gezeichnet) und zwei verschiedene Wandteile können dann abwechselnd mit einander verbunden werden mittels den Einschnitten jedesmals zur Bildung einer Eckverbindung 13.

Es ist klar dass die Fächer 3 für die CD-Kassetten mit den diesbezüglichen CD-Abmessungen entsprechen und dasselbe gilt für die Abmessungen der Fächer die für Video-Kassetten zu benutzen sind. Der Ausdruck "CD-Kassetten" ist also nicht nur beschränkt auf die Benutzung des Regals für Compact Discs sondern umfasst ebenfalls die Benutzung von Kassetten jeder Art. Auch ist es durchaus möglich in einem selben Regal gleichzeitig Fächer 3 verschiedener Abmessungen für verschiedenartigen Kassetten vorzusehen, z.B. CD-Kassetten und Video Kassetten.

Nach den Figuren 2-5 sind Kombinationen abgebildet die mit Hilfe von einem Modul-CD-Regal 1 zusammengestellt werden können und wobei die Aufhängung mittels des obersten Scheitelpunktes an einem Modul stattfindet. Für den Fall dass der Benutzer mehrere Kupplungen zwischen benachbarten CD-Regale zum Stande bringen möchte und dabei nicht jemals ein Scheitelpunkt mittels eines Aufhängeelement an die Wand befestigen möchte, sind handelsübliche Profile 10 und 11, wie z.B. zwei davon in Fig. 5 schematisch gezeigt sind, anzubringen die für eine stabile Befestigung Sorge tragen.

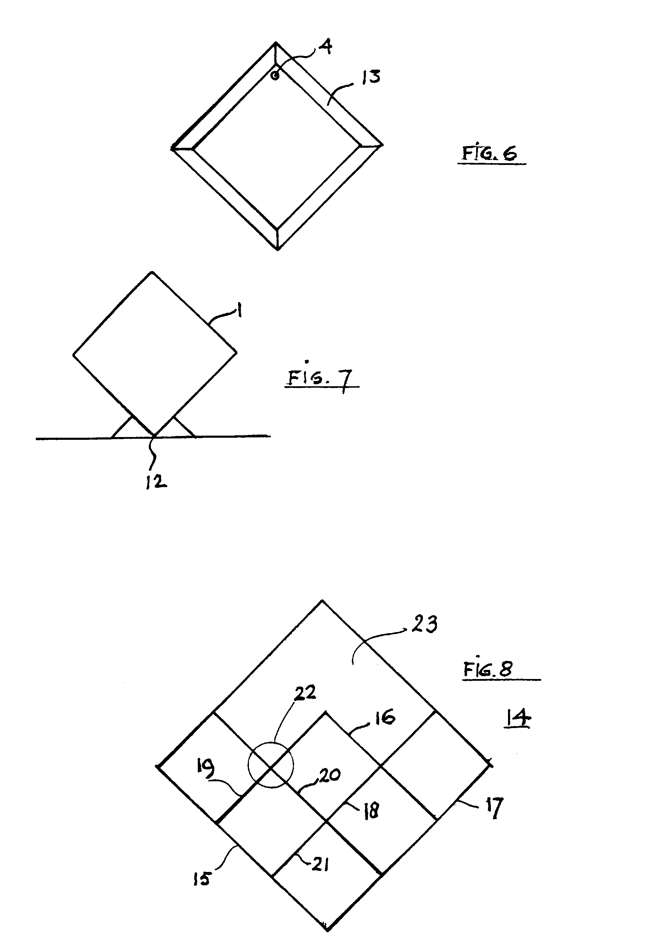

Dieselbe Profile sind eventuell auch brauchbar bei einer stabilen Lagerung eines Regal-Moduls 1 auf einer flachen Ebene wobei das Modul auf seinem untersten Scheitelpunkt 12 stabilisiert wird und von den festgeschraubten Profile gehalten wird. Dieser Stand lässt sich jedoch auch in Fig. 7 effektuieren vorzugsweise mittels zwei gleichgrosse sondern bzw. auch von zwei ungleich grosse dreieckige Stutzelemente. Weiter wird vorgesehen dass auf die im Sicht stehenden Ränder der Regale 1 am Umfang z.B. handelsübliche dekorative Rahmenprofile, Fig. 6, 13 befestigt werden wie sie z.B. oft bei Gemälde benutzt werden. Solche Profile 13 können ganz verschiedenartig sein, geben jedoch den Benutzer einen zusätzlichen gewünschten Formgebung.

Gleichzeitig ist vorzusehen dass die überstehenden Innenwände der CD-Fächer farbig ausgeführt werden können. In Figur 8 sind bei einer schematischen Darstellung eines Moduls 14 für ein bestimmtes CD-Regal die unterschiedlichen Wände 15-21 in mehreren Farben möglich z.B., wie bereits vorher erwähnt wurde, in den mondrianischen Grundfarben Rot, Schwarz, Gelb und Blau, wobei die Eckverbindungen 22 der unterschiedlichen Fächer gegenseitig durch Einschnitte in einem Wandteil realisiert werden. Es fällt dabei auf dass ein oberste Fach 23 L-förmig ist, z.B. für die Lagerung von Video-Kassetten. Manche andere Kombinationslagerungen sind brauchbar ohne von dem Prinzip der Erfindung abzuweichen.

Als Material für das Regal sind Holz, Kunststoff, Glas und/oder Metall geeignet im Ganzen, aber auch in einer Kombination davon.

## Patentansprüche

1. Schrank bzw. Regal für CD-Kassetten, bestehend aus einem untiefen kastenartigen Gehäuse mit einer Aufteilung in einer Anzahl etwa viereckigen Kompartimenten zur Aufstellung von mehreren CD-Kassetten nebeneinander, dadurch gekennzeichnet, dass jeweils ein viereckiges Kompartiment sich in seiner Lage im Gehäuse derart positioniert dass die CD-Kassetten sich durch ihren Eigengewicht infolgedessen nur in einer schrägen Aufstellung im Kompartiment bzw. im CD-Regal befinden.

2. CD-Regal nach Anspruch 1, dadurch gekennzeichnet, dass bei einer Ausführung mit quadratischen Kompartimente die Diagonal-Ebene worin sich jemals ein Paar - oben und unten - gegenüber einander liegenden Scheitelpünkten eines Kompartimentes befindet, mit einer vertikalen Ebene gleich ist.

3. CD-Regal nach Anspruch 2, dadurch gekennzeichnet, dass es versehen ist mit einem quadratischen Gehäuse und somit mit einer quadratischen Zahl Kompartimenten versehen ist, z.B. mit 4, 9, 16 usw. Kompartimenten.

4. Kombinations CD-Regal nach Ansprüche 1-3, dadurch gekennzeichnet, dass mindestens zwei gesonderten CD-Regale versehen sind mit Kupplungselementen zur horizontalen bzw. vertikalen Kupplung.

5. Kombinations CD-Regal nach einem der vorigen Ansprüchen 1-4, dadurch gekennzeichnet, dass zwei gegenüberstehenden, in demselben Scheitelpunkt zusammentreffenden Gehäusewänden in dem benachbarten Gehäuse versehen sind mit einer gehäusewandähnlichen Verlängerung eines identischen CD-Regals.

6. Kombinations CD-Regal nach einem der vorigen Ansprüchen 1-4, dadurch gekennzeichnet, dass zwei gegenüberstehenden, in demselben Scheitelpunkt zusammentreffenden Gehäusewanden in dem benachbarten Gehäuse versehen sind mit einer gehäusewandähnlichen Verlängerung eines nicht-identischen CD-Regals.

7. Geometrisches Kombinations CD-Regal bestehend aus einer Zahl quadratischen und nicht-quadratischen Gehäusern.

8. CD-Regal nach einem der vorigen Ansprüchen 1-7, dadurch gekennzeichnet, dass die Ränder der Gehäuse versehen sind mit einem dekorativen Rahmen nach Art eines Gemälde.

9. CD-Regal nach Anspruch 8, dadurch gekennzeichnet, dass die Rahmen aus Leisten gefertigt sind die nach der Hintenseite des Regals abgeschrägt sind, wodurch der Abstand zu dem Hintergrund oder der Wand kurzer scheint (Fig. 1).

10. CD-Regal nach Ansprüche 8-9, dadurch gekennzeichnet, dass die Leisten die eigene Steifheit des Regals erhöhen.

11. CD-Regal nach einem der vorigen Ansprüchen 1-10, dadurch gekennzeichnet, dass die Rückseite eines quadratischen Gehäuses nur in einem Scheitelpunkt davon mit einem Aufhängemittel versehen ist zur Aufhängung an einer Wand.

12. CD-Regal nach Anspruch 11, dadurch gekennzeichnet, dass der Aufhängepunkt bei einem quadratischen Form in der Ecke eines Rahmens vorgesehen ist (Fig. 1C).

13. CD-Regal nach einem der vorigen Ansprüchen 1-8, dadurch gekennzeichnet, dass bei einer horizontalen Aufstellung, z.B. auf eine Flur und/oder auf eine flache Unterstützung jeweils Stützorgane von gleichseitigen Dreiecksform vorgesehen sind.

14. CD-Regal nach einem der vorigen Ansprüchen 1-13, dadurch gekennzeichnet, dass die Wände der einzelnen Fächer farbig ausgeführt sind, vorzugsweise in einer Farbe und/oder auch in verschiedenen Farben wie z.B. in den Mondriaan Grundfarben.

15. Regal nach einem der vorigen Ansprüche 1-14, dadurch gekennzeichnet, dass Fächer vorgesehen sind, die nur für die Lagerung von CD-Kassetten dienen und ausserdem Fächer mit solchgen Abmessungen vorgesehen sind, die auch für Video-Kassetten oder sonstige Kassetten bestimmt sind.

16. Regal nach einem der vorigen Ansprüche 1-15, dadurch gekennzeichnet, dass die vier Seitenwände sowie die Rückwand des Regals zerlegbar sind und ebenso die einzelnen Trennungswände zwischen den Fächern zerlegbar sind nach Art ähnlicher Trennungswände einer kartonen Verpackungsdose.

17. CD-Regal nach Anspruch 16, dadurch gekennzeichnet, dass die Wandteile über die Hälfte mit Einschnitte versehen sind, wodurch verschiedene Wandteile abwechselend mit einander verbunden werden mittels den Einschnitten.
